# EUROPEAN PATENT APPLICATION

(11) **EP 2 722 240 A2**
(43) Date of publication of application: **23.04.2014**
(21) Application number: 13188909.9
(22) Date of filing: 16.10.2013
(51) Int. Cl.: B60S 1/24

(54) **Joint rod for vehicle wiper system**

(30) Priority: 18.10.2012 CN 201210397614
(71) Applicant: Bosch Automotive Products (Changsha) Co., Ltd, Changsha Hunan 410100 (CN)
(72) Inventor: Chen, Jinsong, 200335 Shanghai (CN); Suresh, Kumar, 602105 Tamil Nadu (IN); Chen, Sheng, 200335 Shanghai (CN); Qi, You, 200335 Shanghai (CN)
(74) Representative: Bee, Joachim

(57) **Abstract**

A linkage (100) for a vehicle wiper system, comprising a plate-shaped body (2) at at least one of opposite ends of the linkage and a ball socket (3)mounted in the body (2), wherein the body (2)has a through-hole (201) perpendicularly extending from an upper surface to a lower surface thereof, and the ball socket (3) is configured as a hollow structure and comprises: a cylindrical segment (34) having an outer dimension which allows it to be inserted through the through-hole (201) , and a flange (31) extending radially from one end of the cylindrical segment and having an outer dimension greater than the inner dimension of the through-hole (201), wherein a portion of an inner wall of the ball socket (3) is sphere-shaped so that a ball head of a second linkage used in the vehicle wiper system to be connected to said linkage can be received therein, and wherein the body of said linkage is connected to the ball socket (3) mechanically. With the configuration of the present invention, manufacturing process of the linkage is simplified and manufacturing cost is reduced.

## Description

### Technical field

The invention relates to a vehicle wiper system, especially to a linkage for a vehicle wiper system, which has at at least one end thereof a ball socket mechanically connected to the linkage body.

### Background

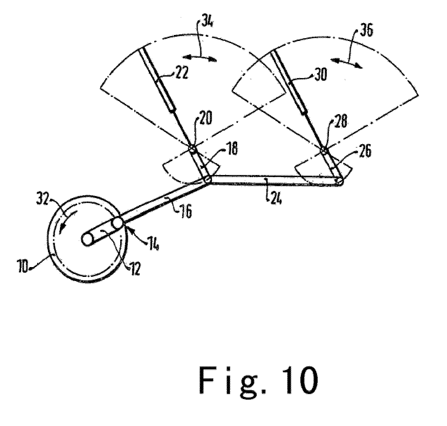

In the prior art, various wiper systems are well-known for wiping off the rain water on vehicle windows to clear the field of view of a driver. A conventional wiper system is shown in Fig. 10, in which a crank 12 is driven by a motor 10 to rotate in a direction 32. The crank 12 is connected to a push rod 16 by a ball joint 14 so that movement of the crank 12 causes the push rod 16 to swing. The push rod 16 has a distal end opposite the ball joint 14. At the distal end, the push rod 16 is connected to one end of a swing rod 18 by another ball joint. The other end of the swing rod 18 is connected to a shaft 20 fixed to a vehicle body. A blade 22 is also connected to the shaft 20, and the blade 22 constitutes as an integrated component together with the swing rod 18, so that the blade 22 and the swing rod 18 rotate or swing together about the shaft 20. The blade 22 is swung in a direction 34 illustrated in Fig. 10 so as to wipe off the rain water on the window.

The wiper system includes two blade assemblies, one of which has been described above. The other blade assembly is configured in the same way. The other blade assembly also includes a shaft 28 connected to the vehicle body, a blade 30 connected to the shaft 28, and a swing rod 26 connected at one end to the shaft 28. The other end of the swing rod 26 opposite to the shaft 28 is pivotally connected to the end of the swing rod 18 opposite to the shaft 20 by a linkage 24, e.g., by a ball joint. With this configuration, the swing movement of the push rod 16 is transmitted to the swing rod 26 by the linkage 24. The blade 30, formed as an integrated component together with the swing rod 26, pivots or swings with the swing rod 26 about the shaft 28, so that the movement of the blade 30 wipes off the rain water on the vehicle windows. The phase relationship between the two blades 22, 30 may be set by adjusting the length of the linkage 24 and the distance between the shafts 20, 28.

In the wiper system configured above, ball joints may be used at the connections of the respective members, for example, the connection between the crank 12 and the push rod 16, the connection between the push rod 16 and the linkage 24, and the connection between the linkage 24 and the swing rod 26.

In the conventional ball joint, generally one of the linkages has a ball head while the other linkage has a ball socket, the connection of the ball socket and the linkage is formed by overmolding, which results in the complicated molding process and the increased manufacturing cost.

### Summary of the invention

When the ball socket and the linkage body are connected by overmolding, complicated molds are needed since the shapes of the components are complicated, whether the ball socket is overmolded on the linkage body or the linkage body is overmolded on the ball socket, which results in a complicated molding process, an increased manufacturing cost and a decreased efficiency.

An object of the invention is to provide a linkage capable of overcoming the above shortcomings, wherein the linkage body and the ball socket are connected mechanically instead of by overmolding. Therefore, manufacturing and assembling are simplified and the manufacture cost is reduced.

The object is achieved by proposing a linkage for a vehicle wiper system, comprising a plate-shaped body at at least one of opposite ends of the linkage and a ball socket mounted in the body, wherein the body has a through-hole perpendicularly extending from an upper surface to a lower surface thereof, and the ball socket is configured as a hollow structure and comprises: a cylindrical segment having an outer dimension which allows it to be inserted through the through-hole, and a flange extending radially from one end of the cylindrical segment and having an outer dimension greater than the inner dimension of the through-hole, wherein a portion of an inner wall of the ball socket is sphere-shaped so that a ball head of a second linkage used in the vehicle wiper system to be connected to said linkage can be received therein, and wherein the body of said linkage is connected to the ball socket mechanically.

According to a preferred embodiment, the body of the linkage is connected to the ball socket by a speed nut.

Wherein a portion of the cylindrical segment of the ball socket projecting beyond the body has an outer surface which is provided with an annular groove extending radially inwards, an upper wall defining the groove is provided with a slot extending toward the end of cylindrical segment opposite to the flange, into which slot the inner edge of the speed nut is inserted, and a lower surface of the speed nut is pressed against the upper surface of the body so that the body is held between the flange of the ball socket and the lower surface of the speed nut under an elastic force of the speed nut.

Preferably, the speed nut is formed of an elastic material into substantially a disc shape, the inner periphery of which has a tip extending upward for snapping into the slot of the upper wall of the annular groove on the outer surface of the cylindrical segment.

According to another preferred embodiment, the body of the linkage is connected with the ball socket by welding.

Wherein the flange of the ball socket has a plurality of projections extending in a direction in which the cylindrical segment extends, the body of the linkage is provided with a plurality of through-apertures around and spaced apart from the through-hole, the cross section of each through-aperture has a shape matching with the cross section of each projection of the ball socket, the cylindrical segment is inserted through the through-hole with the plurality of projections received into the plurality of through-apertures, and the plurality of the projections each have a height equal to or larger than the thickness of the body.

Preferably, the cross section of the through-hole is circular, and the cross section of the cylindrical segment of the ball socket is also circular.

Preferably, the outer surface of the cylindrical segment near the flange has a turn-preventing feature for engaging with a turn-preventing feature on the inner wall of the through-hole of the body of the linkage, the turn-preventing features being complementary in shape.

Wherein the turn-preventing feature in the cylindrical segment is a protrusion projecting radially outwards from the outer surface of the cylindrical segment or a recess concaved inwards from the outer surface, and the turn-preventing feature on the inner wall of the through-hole of the body is a recess depressed radially outwards from the inner wall of the through-hole or a protrusion projecting radially inwards.

According to another aspect of the invention, a vehicle wiper system comprising at least one linkage described above is provided.

With the linkage configured above, the ball socket and the linkage body can be formed independently and then assembled together. When assembling, the ball socket is inserted into the through-hole of the linkage body and then the linkage body and the ball socket are connected mechanically (by a speed nut for snapping them together, or by welding). The assembling process can be performed promptly and simply. Compared with producing the ball socket and the linkage body by overmolding, independently forming the components in the present invention, improves the manufacturing process, increase the efficiency, and the cost is decreased.

### Brief description of the drawings

Some preferred embodiments of the present invention will be explained in detail with reference to the drawings, which constitute a part of the specification, in which:
Fig. 1 schematically illustrates a linkage having a ball socket according to the first embodiment of the invention;
Fig. 2 is an enlarged side view of one end of the linkage of Fig. 1;
Fig. 3 is a plan view of the end of the linkage of Fig. 2;
Fig. 4 is a cross sectional view taken along line A-A in Fig. 2;
Fig. 5 is a cross sectional view taken along line B-B in Fig. 3;
Fig. 6 schematically illustrates a linkage having a ball socket according to the second embodiment of the invention;
Fig. 7 is an enlarged side view of one end of the linkage of Fig. 6;
Fig. 8 is a plan view of the end of the linkage in Fig. 7;
Fig. 9 is a cross sectional view taken along line A-A in Fig. 8; and
Fig. 10 schematically illustrates a configuration of a conventional vehicle wiper system.

### Detailed description of preferred embodiments

Preferred embodiments according to the invention will be described in detail with reference to the drawings, which are shown schematically and not to scale, wherein the same reference numeral refers to similar components.

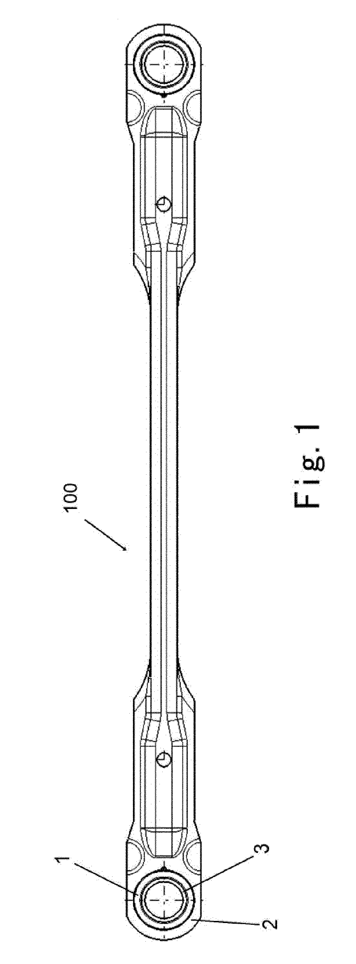

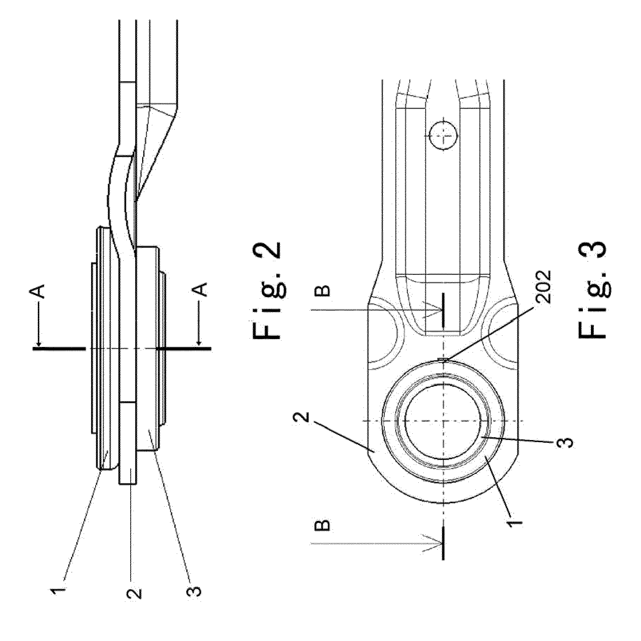

Figs. 1-5 show a linkage according to a first embodiment of the invention. As shown in Fig. 1, the linkage 100 is formed as an elongated flat member. At least one (two, in this embodiment) of opposite ends of the linkage is provided with a ball socket 3. Alternatively, the linkage has a ball socket at one end and has a ball head or the like at the other end. The configuration of the end of the linkage 100 having the ball socket 3 is shown in detail in Fig. 2 and Fig. 3, respectively. Both ends of the linkage 100 are configured in the same way. Therefore, only one end of the linkage will be explained below.

The linkage 100 has a plate-shaped body 2 at the corresponding end. The body 2 is mechanically connected to the ball socket 3 by a speed nut 1, as shown in Figs. 2 and 3.

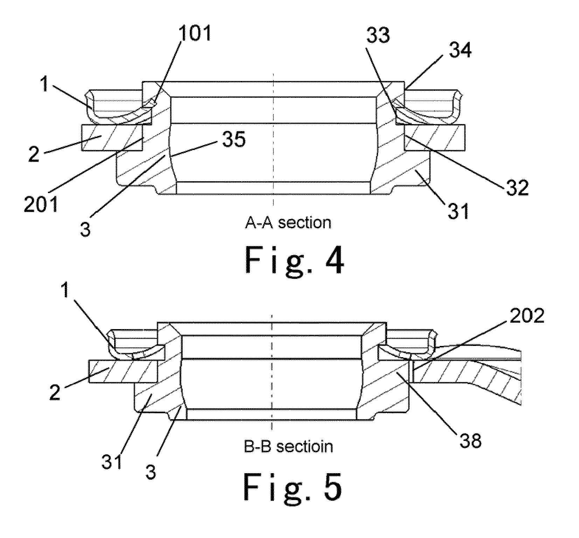

Fig. 4 and Fig. 5 are sectional views taken through line A-A in Fig. 2 and line B-B in Fig. 3, respectively. As shown in the figures, the linkage body 2 has a circular through-hole 201 perpendicularly extending from an upper surface to a lower surface of the body 2. The ball socket 3 is substantially cylinder-shaped and has a cylindrical segment 34 at one end and a flange 31 at the other end. The flange 31 projects radially circumferentially perpendicular to a longitudinal axis of the ball socket. The cylindrical segment 34 has an outer diameter equal to or slightly smaller than the inner diameter of the through-hole 201 so that the cylindrical segment 34 can be inserted into the through-hole. The cylindrical segment 34 has a height greater than the thickness of the body 2 so as to protrude from the body 2. The outer diameter of the flange 31 is greater than the inner diameter of the through-hole 201. In this way, the ball socket 3 is prevented from passing through the through-hole 201. After the cylindrical segment 34 is inserted into the through-hole 201, an upper surface of the flange 31 abuts against the lower surface of the body 2.

An annular groove 33 is formed in an outer surface of the cylindrical segment 34. The annular groove 33 extends radially inwards from the outer surface of the cylindrical segment 34 perpendicular to the longitudinal axis of the ball socket. A bottom surface of the annular groove 33 is substantially flush with the upper surface of the body 2. However, it is also possible that the bottom surface of the annular groove 33 is slightly higher than or slightly lower than the upper surface of the body. The depth, the width and the shape of the annular groove 33 may be varied depending on the concrete structure of the speed nut 1 to be engaged therewith. Although the annular groove 33 shown in Figs. 4-5 has a rectangular cross section, the cross section of annular groove 33 may be in other shapes. Although the annular groove 33 shown in Figs. 4-5 is continuous, it can be alternatively consisted of several segments of discontinuous grooves, depending on the application situation of the linkage and the type of the speed nut 1.

In an upper wall defining the annular groove 33A, there is a slot (not shown) which extends toward the inside of the cylindrical segment 34 and toward the end of the cylindrical segment 34 opposite to the flange 31. An inner end 101 of the speed nut 1 is able to be inserted into the slot. The slot can be continuous or discontinuous, depending on the type of the speed nut 1.

The speed nut 1 is preferably produced by a single elastic sheet. The speed nut is generally of a disc shape. The speed nut is elastically deformed when the inner edge 101 of the speed nut 1 is inserted into the slot and a lower surface of the speed nut 1 presses against the upper surface of the body 2. A restoring force caused by the deformation tends to subject the cylindrical segment 34 to an upward force. In a state that the flange 31 abuts against the lower surface of the body 2, the body 2 is clamped securely between the lower surface of the speed nut 2 and the upper surface of the flange 31, such that a secure connection between the body 2 of the linkage 100 and the ball socket 3 is formed.

The speed nut 1 is not limited by that shown in Figs. 2-5 and may be provided in other forms, so long as the speed nut is able to elastically snap into the slot of the cylindrical segment 34. The speed nut 1 presses against the upper surface of the body 2 and snaps into the slot of an outer wall of the cylindrical segment 34 in an elastic deformed state. A restoring force of the elastic speed nut enables the ball socket to connect with the body tightly.

The ball socket 3 is configured as a hollow cylindrical shape, having a through-hole therein. An inner wall of the through-hole has a segment 35 forming a part of a substantial spherical surface. The spherical segment 35 is used to receive a complementary member, which may be a ball head of a second linkage or the like to be connected to the linkage 100. Relative movement of the linkage 100 relative to the second linkage or other members can be achieved by the rotation of an outer surface of the ball head relative to the spherical segment 35 of the ball socket 3 in all direction.

To prolong the duration life of the linkage, the ball socket 3 may be formed of a wear-resistant material, or the inner spherical segment 35 of the ball socket 3 may be coated with a wear-resistant material. Alternatively, the ball socket 3 may be formed by two pieces, one being the ball socket as shown, and the other being a partial spherical member formed of the wear-resistant material having a certain thickness. The partial spherical member is welded to the spherical segment 35 or assembled with the spherical segment 35 in interference fit manner.

The ball socket 3 is rotationally fixed to the inner wall of the through-hole of the body 2. To this end, a radially outwards extending protrusion 38 is provided on the outer surface of the cylindrical segment 34 of the ball socket 2 adjacent the flange 31. The lengthwise direction of the projection 38 coincides with the axial direction of the ball socket 2. Accordingly, a recess 202 concaved radially inwards is provided in the inner wall of the through-hole 201 of the body 2. The recess 202 has a shape matching with the protrusion 38. When the cylindrical segment 34 of the ball socket 3 is inserted into the through-hole 201 of the body 2, the protrusion 38 is able to engage into the recess 202 to prevent the ball socket 3 from rotating relative to the body 2 during the operation of the linkage. Alternatively, it is also possible that the protrusion 38 is provided in the through-hole 201 and correspondingly the recess 202 is provided in the outer surface of the cylindrical segment 34. The protrusion 38 and the recess 202 constitute a turn-preventing feature.

After the ball socket 3 is inserted into the though-hole 201, the ball socket 3 is held on the body 2 by the speed nut 1, such that the ball socket 3, the body 2 and the speed nut 1 constitute a single piece and are kept from moving relative to each other.

The cross section of the through-hole 201 is not limited to a circular shape. It may be square, so long as it matches the shape of the outer surface of cylindrical segment of the ball socket 3. In this case, the outer surface of the cylindrical segment of the ball socket 3 should also be square and the turn-preventing feature shown in Fig. 3 and Fig. 5 can be omitted.

In addition, the turn-preventing feature is not limited to the type mentioned above. It may be any means for preventing the ball socket from rotating relative to the inner wall of the through-hole 201 of the body 2, such as a pin-hole structure, a wedge-wedge structure, or the like. Any form fitting structure can be conceived to obtain a same effect as mentioned above.

In the above configuration, the linkage is consisted of three independent elements, i.e., the body 2, the ball socket 3 and the speed nut 1 of the linkage 100. These elements may be formed separately and then assembled together. When assembling, the ball socket 3 is inserted into the through-hole 201 of the body 2 of the linkage firstly. Then, the ball socket 3 and the body 2 are snapped together by the speed nut 1, which can be rapidly and easily performed. The manufacturing process in producing the elements of the linkage independently is improved, the cost is reduced, and the efficiency is increase, compared with overmolding the ball socket and linkage body.

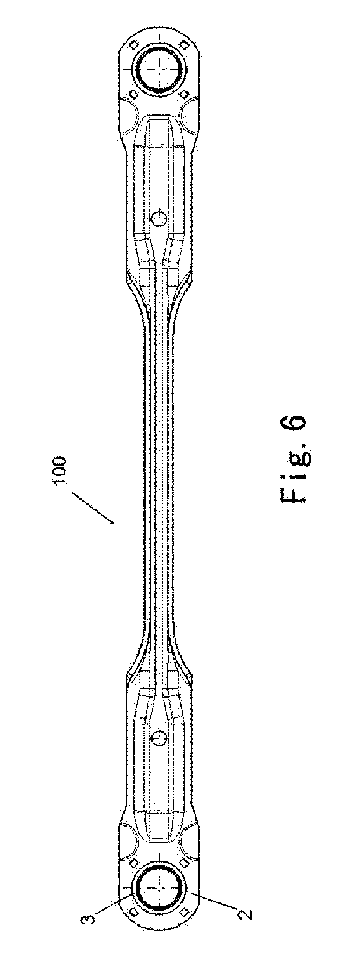

Then, a second embodiment of the invention will be explained with reference to Figs. 6-9. Instead of using the speed nut 1, a ball socket 3 and a body 2 of a linkage 100 according to the second embodiment are connected together by welding, as shown in Fig. 6.

The ball socket 3 in the second embodiment is configured as a hollow structure and has a spherical segment 35 therein as in the first embodiment. The outer profile of the ball socket 3 in the second embodiment is different from that of the first embodiment, which will be explained in detail.

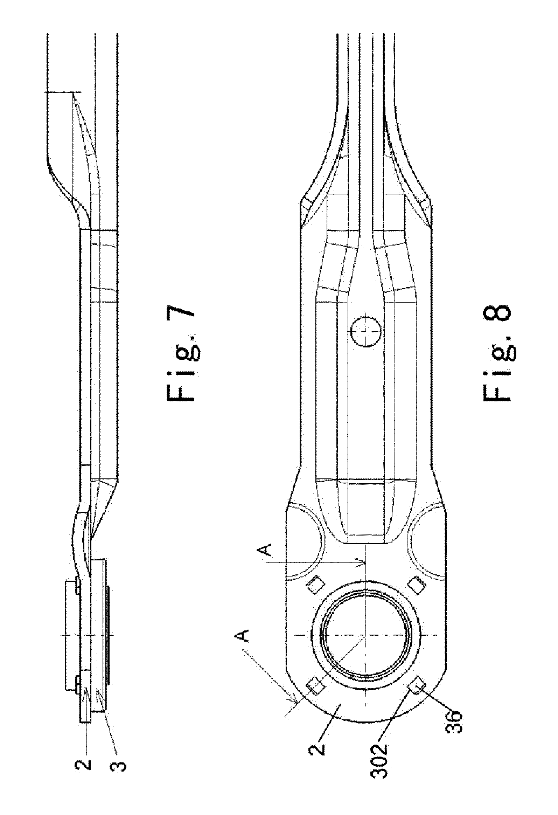

Figs. 7 and 8 show an enlarged configuration of only one end of the linkage 100. The other end is configured in the same way and thus its description is omitted here. Alternatively, as in the first embodiment, the other end of the linkage in the second embodiment may have a ball head or other members rather than the ball socket.

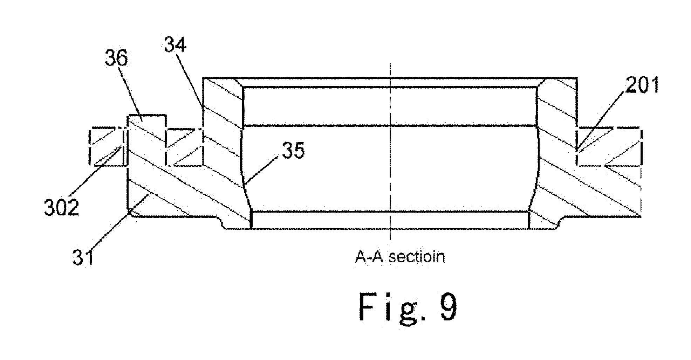

Fig. 9 is a sectional view taken through line A-A in Fig. 8. The ball socket 3 is also substantially cylinder-shaped and has a cylindrical segment 34 and a flange 31 extending radially outwards from one end of the cylindrical segment 34. In the second embodiment, the radial width of the flange 31 is greater than the flange in the first embodiment. This is because the flange 31 in the first embodiment is only necessary to be sized to prevent the ball socket 3 from passing through the through-hole 201.

In Fig. 9, a plurality of projections 36 project from an outer periphery of the flange 31 in the same direction as the cylindrical segment 34 projects. There are four projections in the present embodiment, as shown in Fig. 8. However, the number of the projections 36 is not limited as four, and can be arbitrary, so long as the ball socket is able to be stably connected to the body.

The projections 36 shown in Figs. 8 and 9 each have a rectangular cross section in a plane perpendicular to the axial direction of the ball socket. The cross section of each projection may alternatively be triangular, polygonal or other-shaped.

The body 2 has a plurality of through-apertures 302 provided at an equal interval in a circumferential direction about the through-hole 201. The through-apertures 302 are spaced apart from the through-hole 201. The number of the though-apertures 302 corresponds to that of the projections. There are four through-apertures in the second embodiment. However, fewer or more through-apertures are also possible. The shape of the through-apertures is not limited as being square as shown in the drawings. It may be circular, triangular or polygonal, so long as the shape of the through-aperture is complementary to the shape of the projection 36.

The distance between the central axis of the through-aperture 302 and the central axis of the through-hole 201 is equal to the distance between the central axis of the projection 36 and the central axis of the ball socket 3. When assembling, the ball socket 3 is mounted concentrically in the through-hole 201 such that the cylindrical segment 34 is inserted into the through-hole 201 and the projections 36 are engaged in the through-apertures 302. To this end, the size of the through-aperture 302 should be equal to or slightly greater than the size of the projection so as to facilitate to insert the projection 36.

When the ball socket 3 is inserted into the through-hole 201 by aligning the projections 36 with the through-apertures 302, the projections 36 are inserted into the through-apertures 302 of the body 2 and protrude from the upper surface of the body 2. Therefore, the height of the projection 36 projecting from the upper surface of the flange 31 is set to be equal to or greater than the thickness of the body 2. In this way, the projections 26 and the through-apertures 302 of the body may be welded together to form a secure connection between the ball socket 3 and the body 2.

With this configuration, the ball socket 3 is unable to rotate relative to the through-hole 201 of the body 2 due to the secure connection caused by welding. Any turn-preventing feature is unnecessary. The structure of the linkage is simplified. Compared with the conventional structure in which the ball socket and the linkage body are connected by overmolding, the ball socket and the linkage body may be formed separately, which leads to a simple manufacturing process. The two components only needed to be welded after manufacturing. The cost-efficiency is increased while the complexity of the molding process is decreased.

## Claims

1. A linkage for a vehicle wiper system, comprising a plate-shaped body at at least one of opposite ends of the linkage and a ball socket mounted in the body,
wherein the body has a through-hole perpendicularly extending from an upper surface to a lower surface thereof, and the ball socket is configured as a hollow structure and comprises:
a cylindrical segment having an outer dimension which allows it to be inserted through the through-hole, and
a flange extending radially from one end of the cylindrical segment and having an outer dimension greater than the inner dimension of the through-hole,
wherein a portion of an inner wall of the ball socket is sphere-shaped so that a ball head of a second linkage used in the vehicle wiper system to be connected to said linkage can be received therein, and
wherein the body of said linkage is connected to the ball socket mechanically.

2. The linkage according to claim 1, wherein the body of the linkage is connected to the ball socket by a speed nut.

3. The linkage according to claim 2, wherein a portion of the cylindrical segment of the ball socket projecting beyond the body has an outer surface which is provided with an annular groove extending radially inwards, an upper wall defining the groove is provided with a slot extending toward the end of cylindrical segment opposite to the flange, into which slot the inner edge of the speed nut is inserted, and a lower surface of the speed nut is pressed against the upper surface of the body so that the body is held between the flange of the ball socket and the lower surface of the speed nut under an elastic force of the speed nut.

4. The linkage according to claim 2 or 3, wherein the speed nut is formed of an elastic material into substantially a disc shape, the inner periphery of which has a tip extending upward for snapping into the slot of the upper wall of the annular groove on the outer surface of the cylindrical segment.

5. The linkage according to claim 1, wherein the body of the linkage is connected with the ball socket by welding.

6. The linkage according to claim 5, wherein the flange of the ball socket has a plurality of projections extending in a direction in which the cylindrical segment extends, the body of the linkage is provided with a plurality of through-apertures around and spaced radially apart from the through-hole, the cross section of each through-aperture has a shape matching with the cross section of each projection of the ball socket, the cylindrical segment is inserted through the through-hole with the plurality of projections received into the plurality of through-apertures, and the plurality of the projections each have a height equal to or greater than the thickness of the body.

7. The linkage according to any one of claims 1 to 6, wherein the cross section of the through-hole is circular, and the cross section of the cylindrical segment of the ball socket is also circular.

8. The linkage according to claim 7, wherein the outer surface of the cylindrical segment adjacent the flange has a turn-preventing feature for engaging with a turn-preventing feature on the inner wall of the through-hole of the body of the linkage, the turn-preventing features being complementary in shape.

9. The linkage according to claim 8, wherein the turn-preventing feature in the cylindrical segment is a protrusion projecting radially outwards from the outer surface of the cylindrical segment or a recess concaved inwards from the outer surface, and the turn-preventing feature on the inner wall of the through-hole of the body is a recess depressed radially outwards from the inner wall of the through-hole or a protrusion projecting radially inwards.

10. A vehicle wiper system comprising at least one linkage according to any one of claims 1 to 9.
